# EUROPEAN PATENT APPLICATION

(11) **EP 3 552 867 A1**
(43) Date of publication of application: **16.10.2019**
(21) Application number: 19160891.8
(22) Date of filing: 05.03.2019
(51) Int. Cl.: B60L 53/63, B60L 53/30, B60L 53/65, B60L 53/68, B60L 53/60, B60L 58/12, G01C 21/34

(54) **INTELLIGENT CHARGING NETWORK**

(30) Priority: 06.03.2018 US 201815913693
(71) Applicant: Sham, Wellen, Taipei City (TW)
(72) Inventor: Sham, Wellen, Taipei City (TW)
(74) Representative: Sadler, Peter Frederick

(57) **Abstract**

Embodiments facilitate charging of electric vehicles (EVs) in an EV charging network. The EV charging network can include an EV charging server in communication with a power grid and with a number of geographically distributed EV charging stations electrically coupled with the power grid, receiving station capacity information and grid capacity information therefrom, respectively. In response to receiving an EV charging request, the EV charging server can: compute a charging timeframe; identify one or more EV charging stations as available for charging the requesting EV during the charging timeframe as a function of the station capacity information, and as having at least a threshold associated power delivery capacity for charging the requesting EV during the charging timeframe as a function of the grid capacity information; and communicate an EV charging response via the communication network to direct the requesting EV to the identified EV charging station(s).

## Description

### FIELD

This invention relates generally to electric vehicle charging, and, more particularly, to intelligent electric vehicle charging networks.

### BACKGROUND

An electric vehicle charging station, also called EV charging station, electric recharging point, charging point, or charge point and EVSE (electric vehicle supply equipment), is an element in an infrastructure that supplies electric energy for the recharging of electric vehicles, such as plug-in electric vehicles, including electric cars, neighborhood electric vehicles and plug-in hybrids. As electric vehicles and battery electric vehicle ownership is expanding, there is a growing need for widely distributed publicly accessible charging stations, some of which support faster charging at higher voltages and currents than are available from residential EVSEs. Many charging stations are on-street facilities provided by electric utility companies or located at retail shopping centers and operated by many private companies. These charging stations provide one or a range of heavy duty or special connectors that conform to the variety of electric charging connector standards.

With the growth of electric vehicle ownership, the present infrastructure of EV charging stations will soon be unable to support charging EVs. Some electric utilities have reported numbers that indicate that even a single 220V charger within the circuit served by a transformer may, during peak consumption hours, overload and burn out the transformer. Therefore, the existing infrastructure needs to be upgraded both from a capacity standpoint as well as from a flexibility and power routing and control standpoint. While it is foreseeable that the infrastructure of EV charging would expand as to the number of power lines and the number of EV charging stations, there is also a need to improve charging of the individual EVs. For example, unlike the traditional gas stations, EV charging stations may not be expanded in areas due to constraints of a local power grid. Gas can be ported by a truck to wherever the gas station may be and stored, electricity may not be transmitted to EV stations above the capacity of the power grid. Therefore, there is a need to improve routing and scheduling of charging of the individual EVs through the EV charging stations.

### BRIEF SUMMARY

Among other things, embodiments provide novel systems and methods for intelligent charging of electric vehicles (EVs) in an EV charging network. For example, the EV charging network can include a number of geographically distributed EV charging stations electrically coupled with a power grid. The power grid can have power grid structures (e.g., power transmission towers) in communication with a power grid server. Each EV charging station can include a charging interface adapted to deliver electric power from at least one of the power grid structures to an EV electrically coupled with the charging interface. An EV charging server is in communication with the EV charging stations via a communication network to receive station capacity information from the EV charging stations indicating availabilities of the EV charging stations, and is also in communication with the power grid server via the communication network to receive grid capacity information from the power grid server indicating electrical load on the power grid. The EV charging server can be configured, in response to receiving an EV charging request associated with a requesting EV, to compute a charging timeframe according to the EV charging request; identify at least one of the EV charging stations as available for charging of the requesting EV during the charging timeframe as a function of the station capacity information, and as having at least a threshold associated power delivery capacity for charging of the requesting EV during the charging timeframe as a function of the grid capacity information; and communicate an EV charging response via the communication network to direct the requesting EV to the identified at least one EV charging station.

According to one set of embodiments, a method is provided for electric vehicle (EV) charging. The method includes: receiving grid capacity information via a communication network from a power grid server in communication with power grid structures of a power grid, the grid capacity information indicating a load on at least a portion of the power grid; receiving station capacity information via the communication network from at least some EV charging stations indicating an availability of the at least some EV charging stations for EV charging, each EV charging station electrically coupled with the power grid to deliver electric power from the power grid to an EV electrically coupled with the EV charging station via a charging interface; receiving an EV charging request associated with a requesting EV; computing a charging timeframe according to the EV charging request; identifying at least one of the EV charging stations as available for charging of the requesting EV during the charging timeframe as a function of the station capacity information, and as having at least a threshold associated power delivery capacity for charging of the requesting EV during the charging timeframe as a function of the grid capacity information; and communicating an EV charging response via the communication network to direct the requesting EV to the identified at least one EV charging station.

According to another set of embodiments, a system is provided for EV charging. The system includes a communications processor and a scheduling processor. The communications processor is to communicate with a communication network and has non-transient memory, having stored thereon: executable instructions to receive a grid capacity information via the communication network from a power grid server in communication with power grid structures of a power grid, the grid capacity information indicating a load on at least a portion of the power grid; executable instructions to receive station capacity information via the communication network from at least some EV charging stations indicating an availability of the at least some EV charging stations for EV charging, each EV charging station electrically coupled with the power grid to deliver electric power from the power grid to an EV electrically coupled with the EV charging station via a charging interface; and executable instructions to receive an EV charging request associated with a requesting EV. The scheduling processor is to communicate with the communication network and has non-transient memory, having stored thereon: executable instructions to compute a charging timeframe according to the EV charging request; and executable instructions to identify at least one of the EV charging stations as available for charging of the requesting EV during the charging timeframe as a function of the station capacity information, and as having at least a threshold associated power delivery capacity for charging of the requesting EV during the charging timeframe as a function of the grid capacity information. The non-transient memory of the communications processor further has, stored thereon, executable instructions to communicate an EV charging response via the communication network to direct the requesting EV to the identified at least one EV charging station.

This summary is not intended to identify key or essential features of the claimed subject matter, nor is it intended to be used in isolation to determine the scope of the claimed subject matter. The subject matter should be understood by reference to appropriate portions of the entire specification of this patent, any or all drawings, and each claim.

The foregoing, together with other features and embodiments, will become more apparent upon referring to the following specification, claims, and accompanying drawings.

### BRIEF DESCRIPTION OF THE DRAWINGS

The present disclosure is described in conjunction with the appended figures:
**FIG. 1** shows an illustrative electrical vehicle (EV) charging station network environment, according to various embodiments;
**FIG. 2** shows an illustrative EV charging server in context of other components of an EV charging environment, such as EV charging station network environment, according to various embodiments;
**FIG. 3** generally shows how a charging request can be received by a EV charging server from a requesting EV and/or through an EV charging station via communication network(s);
**FIG. 4** illustrates a simplified computer system that can be used implement various embodiments described and illustrated herein; and
**FIG. 5** shows an illustrative flow diagram of a method for EV charging, according to various embodiments.

In the appended figures, similar components and/or features may have the same reference label. Further, various components of the same type may be distinguished by following the reference label by a second label (e.g., a lower-case letter) that distinguishes among the similar components. If only the first reference label is used in the specification, the description is applicable to any one of the similar components having the same first reference label irrespective of the second reference label.

### DETAILED DESCRIPTION

Over recent years, personal electric vehicles (including fully electric cars and trucks, plug-in hybrid cars and trucks, and the like) have gained in popularity, and increasing numbers are being manufactured and purchased around the world. The rise in numbers of personal EVs on the road has brought an increased demand for infrastructure to support the EVs, including an increased demand for charging spots to recharge the EV batteries. Presently, many EV owners have home EV charging spots, for example, in their personal or shared garages. Increasingly, EV charging spots are being provided in office and retail parking lots, and the like. However, various considerations have frustrated attempts to increase availability of EV charging spots. One such consideration is that power grid constraints and related costs can limit the quantity of EV charging spots in a particular location. Further, because EV charging points at office and retail locations tend to be in use primarily during business hours can further increase the impact of such uses on the power grid, and can increase the cost (e.g., where power costs increase during peak hours). Another such consideration is that different EVs have different types of interfaces (e.g., complying with different interface standards), including different types of wired and wireless charging interfaces; and different EVs can support different charging characteristics, such as voltage and current levels.

Among other things, embodiments are described herein for providing intelligent EV charging networks. For example, an EV charging server communicated with a large number of EV charging stations and with one or more power grids via one or more power grid servers, where the EV charging stations are adapted to deliver electrical power from the power grid(s) to EVs. The EV charging server can monitor the power grid(s) to determine and/or model grid capacity information; such as to determine whether a particular portion of the power grid is presently, or is likely at some future time to be, overloaded. The EV charging server can also monitor the EV charging stations to determine and/or model station capacity information; such as to monitor which EV charging stations are presently, or are likely at some future time to be, available for charging a requesting EV. The EV charging server can compute and implement responses to EV charging requests from EVs by identifying EV charging stations that are suitable for fulfilling the requests according at least to present and/or modeled grid capacity information and station capacity information. Some implementations can compute the responses based on additional information, such as locations of EV charging stations relative to a requesting EV, EV charging interface types available at particular EV charging stations, etc. Further, some implementations provide additional features, such as control of some or all EV charging stations, provision of guidance information for requesting EVs to locate identified EV charging stations, etc.

Embodiments of the disclosed technology will become clearer when reviewed in connection with the description of the figures herein below. In the following description, numerous specific details are set forth to provide a thorough understanding of the present invention. However, one having ordinary skill in the art should recognize that the invention may be practiced without these specific details. In some instances, circuits, structures, and techniques have not been shown in detail to avoid obscuring the present invention.

Reference herein to an "electric vehicle," "EV," or the like, is intended broadly to include any suitable type of vehicle powered solely or partly by an electric power system that is rechargeable via an external charging interface. For example, an EV can be an all-electric vehicle, a hybrid vehicle, a plug-in hybrid vehicle, or the like. Further, while the drawings and descriptions generally suggest the EV as a car, the EV can be any suitable vehicle, such as an automobile (e.g., car, truck, motorcycle, van, recreational vehicle, bus, transport truck, construction vehicle, etc.), a rail vehicle (e.g., train, etc.), a maritime vehicle (e.g., speed boat, cruise ship, etc.), an aeronautical vehicle (e.g., airplane, flying drone, etc.), or the like. Further, reference herein to an "EV customer," or the like, is intended generally to include any human or corporate customer of EV charging services described herein. For example, the EV customer can be a present driver or passenger of an EV (e.g., even if that customer is not an owner of the EV), an owner of the EV (even that customer is not the driver or passenger presently or ever), or a holder of an account with a provider of EV charging services used in association with the EV.

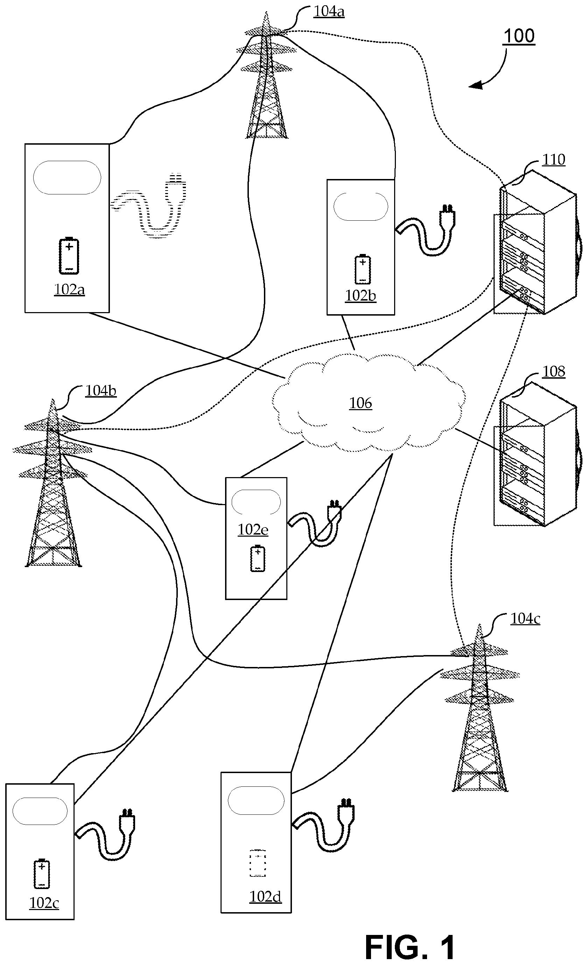

**FIG. 1** shows an illustrative EV charging station network environment 100, according to various embodiments. As shown, the EV charging network environment 100 can include one or more EV charging stations 102. An EV charging station 102 can be connected to a power grid structure 104 that provides power to the EV charging station 102, such as a power transmission tower. The power grid structures 104 can form one or more power grid, and each power grid can include one or more power grid servers 110. As used herein, the term "power grid," or "grid," can refer to any suitable type of power grid that can provide sufficient power for multiple EV charging station 102, as described herein. In one implementation, the power grid is regional (e.g., city wide), and the power grid structures include power transmission towers 104 that transmit electric power to the EV charging stations 102 through power lines. In another implementation, the power grid is local to a group of EV charging stations 102, and the power grid structures include solar panels, wind turbines, etc.

The power grid server(s) 110 and EV charging stations 102 can be in communication with an EV charging server 108 via one or more communication networks 106. The EV charging server 108 can be implemented as a single computational environment, as a group of collocated components, as a distributed system (e.g., some or all components being implemented remotely from others of the components), or in any other suitable manner. The EV charging server 108 can receive information via the communication network(s) 106 regarding status and/or other characteristics of the power grid structures 104 and the EV charging stations 102, which it can use to implement various intelligent charging network features described herein. Such information can be received by the EV charging server 108 periodically (e.g., according to a predetermined schedule), on-demand (e.g., by communicating a request for such information from the EV charging server 108 via the communication network(s) 106), or in any other suitable manner.

Information regarding an individual EV charging station 102 can be gathered by the EV charging server 108. The information regarding a given EV charging station can include one or more charging modes supported by given EV charging station 102. For example, EV charging station 102a may support a fast mode that may allow an empty battery of an EV to be charged within minutes, a regular mode that may allow the batty to be charged within one hour or so, and a slow mode that may allow the battery to be charged within a few hours. The information regarding the given EV charging station 102 can include availability of the given EV charging station 102. The availability may indicate during which time slots the given EV charging station 102 is available and/or for what mode of charging. For example, the EV charging station 102 may be reserved for two charging sessions for two different EVs with a 45-minute window between the two charging sessions. In that example, the information regarding the given EV charge station 102 may indicate that the EV charging station is available to charge an EV in a fast mode for 45 minutes.

The information regarding the individual EV charging station 102 may include information indicating certain type or types of EVs that are supported by the given EV charging station 102. In accordance with various EV standards, there may be different plug types and different charge methods for the EVs. For example, currently there are four different plug types that can be used by EVs. The information regarding the given EV charging station 102 may indicate what types of EVs or plug types that are supported by the given charging station 102. Similarly, information regarding the individual EV charging station 102 may include physical characteristics of the EV charging station 102, such as its dimensions (e.g., suitability for certain types and/or sizes of vehicles).

The information regarding the individual EV charging station 102 may include information indicating a location of the individual EV charging station 102. The location information may include GPS coordinate information, surrounding information (e.g., the EV charging station 102 is located in a shopping mall, the EV charging station 102 is in a low overhead clearance area), road information (e.g., one or more access roads to EV charging station 102, whether access is via a toll or private road, etc.), and/or any other suitable information. Such information can be used to determine if the location of the EV charging station 102 is suitable for charging a given EV. For example, if the location information indicating the EV charging station is located in a shopping mall that has business hours between 9am - 9pm, it may be determined that EV charging station is not suitable for charging an EV overnight in a slow mode.

In some embodiments, for storing and collecting the information described above, the EV charging station 102 may be equipped with necessary hardware. For example, one or more chips may be embedded in a given EV charging station 102, and the chips may be configured to store the location information of the given EV charging station 102, the type of EVs that can be supported by the given EV charging station 102, and/or any other static information regarding the given EV charging station 102. In those embodiments, the chips can be configured to collect dynamic information regarding the given charging station 102, such as the current schedule of the EV charging station, the current load on the EV charging station and/or its power grid and/or any other dynamic information. In some implementations, the individual EV charging stations 102 in the network 102 may be operatively connected to a corresponding monitoring devices, for example a computer located near the EV charging stations 102. In one implementation, it is contemplated that the computer can be operated by a human operator. In that implementation, the human operator can log the dynamic information regarding the EV charging station(s) monitored by the human operator. In other implementations, some or all of the static and/or dynamic information can be monitored by the EV charging server 108, which can be local to, or remote from, any EV charging station 102 being monitored.

The information regarding EV charging stations 102 and power grid structures 104 can be communicated to the EV charging server 108 over the communication network(s) 106 in any suitable manner. The communications network(s) 106 can include any suitable number and type of public and/or private, wired and/or wireless communications links. In one implementation, each EV charging station 102 is equipped with wireless communication capability, such that it can transmit its location information, capacity information, schedule information, and/or any other suitable information to the EV charging server 108 periodically (e.g., once every 10 minutes). In some implementations, the communication network(s) 106 include a backbone network, such as a cellular or optical network infrastructure.

According to some embodiments, the EV charging station network environment 100 includes a number of geographically distributed EV charging stations 102 electrically coupled with the power grid. The "power grid" can include one or more power grids or power sub-grids having one or more power grid structures 104 in communication with one or more power grid servers 110. Each EV charging station has a charging interface adapted to deliver electric power from the power grid to an EV electrically coupled with the charging interface (e.g., wired, wireless, etc.). An EV charging server 108 is in communication with the EV charging stations 102 via the communication network(s) 106 to receive station capacity information indicating availabilities of the EV charging stations 102, and the EV charging server 108 is in communication with the power grid server(s) 110 via the communication network(s) 106 to receive grid capacity information indicating electrical load on the power grid.

In some embodiments, each power grid structure 104 is associated with a respective portion of a total grid capacity of the power grid, and each EV charging station 102 is electrically coupled with at least one of the power grid structures 104. In such embodiments, each charging interface is adapted to deliver electric power from the one or more power grid structures with which it is coupled, and the associated power delivery capacity of each EV charging station is defined by the respective portion of the total grid capacity associated with the power grid structure(s) to which it is coupled. For example, different EV charging stations 102 can have different power delivery capacities at any given time, according to which portions of which power grids are supplying power to those EV charging stations 102, and the present load on those portions of those power grids.

The EV charging server 108 is configured, in response to receiving an EV charging request associated with a requesting EV, to implement a number of features. One such feature includes computing a charging timeframe according to the EV charging request. Another such feature includes identifying at least one of the EV charging stations as available for charging the requesting EV during the charging timeframe as a function of the station capacity information, and as having at least a threshold associated power delivery capacity for charging the requesting EV during the charging timeframe as a function of the grid capacity information. Another such feature includes communicating an EV charging response via the communication network to direct the requesting EV to the identified at least one EV charging station.

In some implementations, the EV charging server 108 can be further in communication with multiple EVs (including the requesting EV) via the communication network(s) 106, and the EV charging server 108 can receive the EV charging request via the communication network(s) 106 from the requesting EV. In some embodiments, the EV charging server 108 can compute a grid profile as a function of the grid capacity information and/or can compute a station profile as a function of the station capacity information. The grid profile estimates a future load on at least a portion of the power grid as a function of historically received grid capacity information, and the station profile estimates a future station availability as a function of historically received station capacity information. In such implementations, the at least one of the EV charging stations 102 is identified as having at least the threshold associated grid capacity for charging of the requesting EV during the charging timeframe as a function of the grid profile, and/or the at least one of the EV charging stations 102 is identified as available for charging of the requesting EV during the charging timeframe as a function of the station profile. In some embodiments, in response to receiving the EV charging request, the EV charging server 108 can communicate a request message to the power grid server(s) 110 and/or the EV charging stations 102 via the communication network(s) 106, and the station capacity information and/or the grid capacity information can be received in response to the request message. Additionally, or alternatively, the station capacity information and/or the grid capacity information can be received periodically, for example, according to a predefined schedule or automatically in response to trigger events.

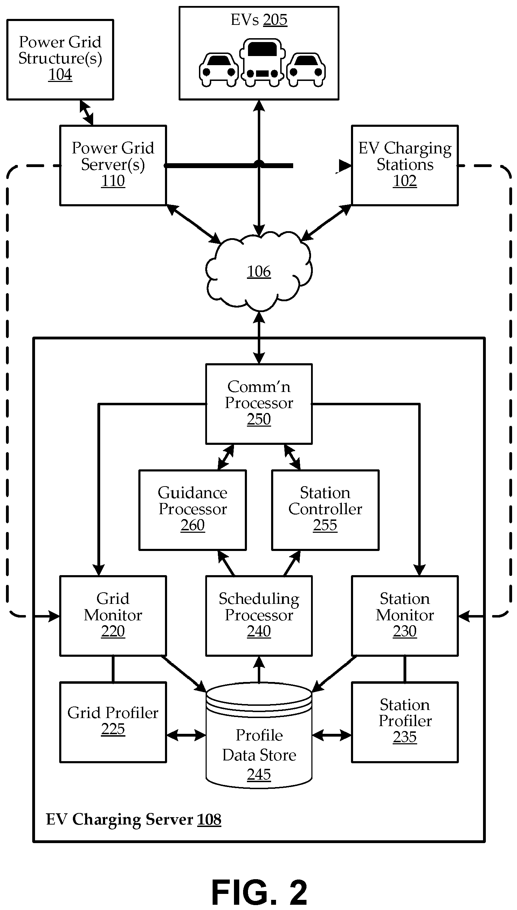

**FIG.** 2 shows an illustrative EV charging server 108 in context of other components of an EV charging environment, such as EV charging station network environment 100, according to various embodiments. Embodiments of the EV charging server 108 include some or all of a grid monitor 220, a station monitor 230, a scheduling processor 240, a communications processor 250, and a guidance processor 260. Though components are illustrated as particular blocks coupled by particular paths, such blocking and coupling is only intended to be illustrative. In other embodiments of the EV charging server 108, multiple of the illustrated components can be combined into fewer components, illustrated components can be split into multiple components, components can be coupled together differently (e.g., all communications passing through a central processor), etc. Further, while the various components of the EV charging server 108 are shown together, embodiments can be implemented with all components collocated, or as some or all components distributed over multiple systems and/or computational environments.

Embodiments of the communications processor 250 can be in communication with any or all of power grid server(s) 110, geographically distributed EV charging stations 102, and EVs 205. In some embodiments, the grid monitor 220 receives grid capacity information via the communication network(s) 106 and the communications processor 250 from the power grid server(s) 110. The grid capacity information can indicate any suitable information relating to a capacity of the grid (or portion of the grid) to deliver power. For example, the grid capacity information can indicate a present load on at least a portion of the power grid (e.g., on one or more power grid structure(s) 104). The grid capacity information can be received with any suitable resolution. For example, the grid capacity information can indicate information for a particular power grid structure 104, a group of power grid structures 104, a sub-grid, an entire grid, etc. Further, the grid capacity information can include additional information, such as physical locations of power grid structures 104, which EV charging stations 102 are coupled with particular power grid structures 104, operational health or maintenance records for particular power grid structures 104, etc.

Some embodiments of the grid monitor 220 store some or all of the received grid capacity information in a profile data store 245. In other embodiments, the received and/or stored grid profile information can be passed to and processed by a grid profiler 225. The grid profiler 225 can compute the grid profile as a function of the grid capacity information, such that the grid profile estimates a future load on at least a portion of the power grid as a function of the present and/or stored (i.e., historically received) grid capacity information. For example, the grid profile can include a graph, chart, function, or other suitable indication of a predicted capacity of all or part of the power grid at some time, or range of times, in the future. In some implementations, the grid profiler 225 can process additional information and/or variables. For example, the grid profiler 225 can compute updated, alternate, and/or other estimates of future grid capacity that account for usage safety margins, loads in addition to those normally present, etc. In general, the grid capacity information can include any information useful for predicting whether a particular EV charging station 102 presently has, or will have at some time or times in the future, capacity for EV charging. Such information can account for different charging modes (e.g., different charging modes may use different amounts of voltage or current), different vehicle types and/or charging needs (e.g., different charge states or battery capacities), different interface types (e.g., wired and wireless charging may load the grid differently), etc. Further, the prediction can be communicated in any suitable manner; such as by indicating a predicted numeric capacity level, a predicted numeric likelihood of sufficient capacity, a binary 'yes' or 'no' indication, etc.

In some embodiments, the station monitor 230 receives station capacity information via the communication network and the communications processor 250 from at least some the EV charging stations 102. As described above, each EV charging station 102 is electrically coupled with the power grid (e.g., with one or more of the power grid structures 104) to deliver electric power from the power grid to an EV 205 that is electrically coupled with the EV charging station 102 via a charging interface. The station capacity information can provide any suitable indication of availability of one or more EV charging stations 102 for EV charging. For example, the station capacity information can indicate whether any vehicle is parked in a parking space associated with the EV charging station 102, whether an EV 205 is electrically coupled with the charging interface of the EV charging station 102, etc. Embodiments of the station monitor 230 can receive other information relating to the EV charging stations 102. For example, the station monitor 230 can receive information (e.g., as part of the station capacity information, or separate therefrom) indicating physical locations (e.g., address, map coordinates, etc.) of particular EV charging stations 102, types of charging interfaces and/or charging modes supported by particular EV charging stations 102, accessibility of particular EV charging stations 102 (e.g., whether on a toll road, in a private parking area, in a low overhead clearance area, etc.), etc.

Some embodiments of the station monitor 230 store some or all of the received station capacity information in the profile data store 245. In other embodiments, the received and/or stored capacity profile information can be passed to and processed by a station profiler 235. The station profiler 235 can compute the station profile as a function of the station capacity information, such that the station profile indicates an estimate of future station availability as a function of received and/or stored (i.e., historically received) station capacity information. For example, the station profile can include a graph, chart, function, or other suitable indication of a predicted availability of any one or more EV charging stations 102 at some time, or range of times, in the future. In some implementations, the station profiler 235 can process additional information and/or variables. For example, the station profiler 235 can compute updated, alternate, and/or other estimates of future availability that account for holidays, business closure days, weather patterns, and/or any other information that can impact present and/or predicted availability of a particular EV charging station 102. usage safety margins, loads in addition to those normally present, etc. The prediction of availability can be communicated in any suitable manner; such as by indicating a predicted numeric likelihood of availability, a predicted schedule of availability over time, a binary 'yes' or 'no' indication of availability at a particular time, etc.

Some embodiments of the EV charging server 108 receive EV charging requests via the communication network(s) 106. Each EV charging request can be associated with a respective requesting EV (one of the EVs 205). The EV charging request can be received in any suitable manner, for example, from a VCU or other component of the requesting EV, or from a device (e.g., a mobile phone, or the like) of an EV customer of the requesting EV. The EV charging request can indicate a present request or a future request. For example, a present request can include a request from an EV 205 already at the location of a particular EV charging station 102; or from an EV 205 on route to, in proximity to, or otherwise currently requesting the services of EV charging stations 102 (e.g., a specified EV charging station 102, any of a specified group of region of EV charging stations 102, any unspecified EV charging station 102, etc.). Some future requests include requests from an EV 205 for a specified time, such that one or more EV charging stations 102 is identified as available, and as having capacity, for EV charging at the specified time. Other future requests include requests from an EV 205 for any time within a specified range of times, for a soonest available time, etc. In such future requests, embodiments can find one or more optimized pairings between available EV charging stations 102 and requested times. Some such pairings can account for additional variables (e.g., according to preset algorithms, user-selected preferences, etc.), such as giving preference to availability of EV charging stations 102 with particular characteristics (e.g., support for particular charging modes, or located in particular areas), giving preference to certain times of day (e.g., preferring work hours or non-work hours, giving preference to combinations of factors (e.g., preferring locations near work during work hours), etc.

Embodiments of the EV charging server 108 compute a charging timeframe according to the EV charging request. In some cases, the EV charging request explicitly indicates the charging timeframe. For example, the EV charging request can include a reservation time entered by a user via a scheduling interface (e.g., an application running on a device of the EV or the EV customer), which can include explicit specification of some or all of a start time, an end time, a time window, etc. In other cases, some or all of the charging timeframe is derived implicitly from the EV charging request. For example, the EV charging request can indicate a present request for EV charging, and the charging timeframe can be set to some next predetermined scheduled charging time (e.g., each 15 minutes). As another example, the charging request can indicate a start time, and an end time can be estimated according to average charge times, average charge times for batteries in the same charge state as that of the requesting EV's battery, average charge times for similar or identical EVs, set durations (e.g., two-hour blocks), paid increments (e.g., the EV customer paid for one hour), etc.

In some embodiments, the scheduling processor 240 can receive information (e.g., GPS location information, or the like) from which it can determine a geographic location of the requesting EV in accordance with a receipt time of the EV charging request. For example, the geographic location is determined as the present location of the requesting EV at the time of initiating the EV charging request. In another example, an EV 205 requests EV charging for some future time (e.g., tomorrow at 11:00 am), and it is determined (explicitly or implicitly) that the requesting EV will be physically located at a particular location (e.g., the EV customer's office parking lot) at that time. The scheduling processor 240 can identify (e.g., via information stored in the profile data store 245, via querying EV charging stations 102 via the station monitor 230, or in any other suitable manner) a set of candidate stations as those of the EV charging stations 102 having respective station locations within a threshold proximity to the geographic location of the requesting EV. For example, the candidate stations can be those within a ten-mile radius, those within a ten-minute drive, etc. from the geographic location of the requesting EV. The scheduling processor 240 can compute respective travel times to respective station locations of each candidate station from the present location, and can compute the charging timeframe to account for some or all of the respective travel times. For example, the charging timeframe can have a start time defined according to the shortest travel time (i.e., the EV charging time 102 likely to be reached most quickly by the requesting EV), defined as a range of start times (e.g., accounting for the various travel times), etc. In some implementations, determining the geographic location involves computing a predicted travel path for the requesting EV. The travel path can be predefined by an EV customer, predicted based on a historical record of travel paths (e.g., the EV almost always follows the same path between home and work during work days), or in any other suitable manner. In such implementations, identifying the set of candidate stations can include identifying those of the EV charging stations 102 having respective station locations within the threshold proximity to the predicted travel path (e.g., causing no more than a certain time or distance detour from the predicted travel path). In such implementations, the travel times to the respective locations can be defined all from a common starting point (e.g., from the beginning of the predicted travel path), or they can account for expecting the requesting EV to be at different locations on the predicted travel path at different times (e.g., which can impact traffic effects, EV charging station 102 availability, etc.). In other implementations, computing the charging timeframe further includes determining an estimated remaining range according to a present charge state of a battery of the requesting EV, and computing the threshold proximity as a function of the estimated remaining range. For example, if the battery of the requesting EV is almost out of charge, the threshold proximity can automatically be computed to find only those EV charging stations 102 that are very close by.

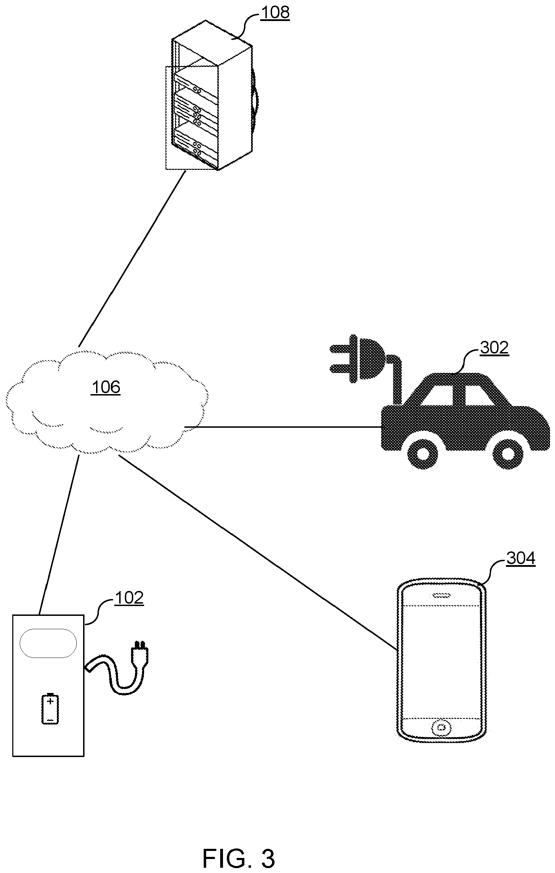

For the sake of illustration, FIG. 3 generally shows how a charging request can be received by the EV charging server 108 (e.g., by the communications processor 250 of FIG. 2) from a requesting EV 302 (e.g., one of the EVs 205 of FIG. 2) and/or through an EV charging station 102 via the communication network(s) 106. In some embodiments, the EV 302 can be equipped with one or more processors that can request a charging session for EV 302. For example, the EV 302 can be equipped with vehicle control unit (VCU) configured to determine whether the EV 302 needs to be charged. For instance, the VCU can be configured to acquire information regarding a current level of battery power remaining in the battery or batteries of the EV 302 and information regarding a destination or destinations the EV 302 is or will be traveling to. Based on such information, the VCU can determine whether there is enough battery power for EV 302 to travel to the destination(s) and generate a request for charging the EV 302 when it determines there is not enough battery power. The request generated by the VCU in those implementations can include information indicating a current location of the EV 302, a destination the EV 302 is or will be traveling to, a current speed of the EV 302, one or more EV charging plug types supported by the EV 302, charge state (e.g., remaining battery power) of the EV 302 battery, one or more charging modes supported by EV 302, and/or any other aspects.

In some cases, the request received by the EV charging server 108 is not initiated directly from an EV 302; rather, the request can be initiated by a computing device associated with the EV 302, such as a mobile device of an EV customer. For example, an application on smart phone 304 can be used to initiate a request to charge the EV 302. In such embodiments, the request generated by the smart phone 304 can include the EV information described above, a requested time to begin the charging and as well as location information of the EV 302, and/or other suitable information. For example, the user may be traveling in EV 302 with the smart phone 304, such that the location of the smart phone 304 is the location of EV 302. In that example, the location of the smart phone 304 can be transmitted to EV charging server 108 as the location of the EV 302. In other implementations, a request initiated by an EV customer's device (e.g., smart phone 304) can be supplemented by information from the EV 302 (e.g., a VCU or other component). In some implementations, requests from the EV 302 and/or from the EV customer's device (e.g., smart phone 304) can be communicated to the EV charging server 108 via the communication network(s) 106 (e.g. via a cellular network, WiFi network, etc.). In other implementations, a request can be initiated, and/or additional information can be provided, by one or more EV charging stations 102. For example, the request can be initiated by an EV customer via a user interface of the EV charging station 102, and the initiated request can be communicated from the EV charging station 102 to the EV charging server 108. Similarly, requests initiated by an EV 302 and/or by an EV customer's device (e.g., smart phone 304) can be communicated to an interface of an EV charging station 102, and from the EV charging station 102 to the EV charging server 108 via the communication network(s) 106.

In response to receiving the EV scheduling request, embodiments of the scheduling processor 240 seek to identify one or more EV charging stations 102 to fulfill the EV charging request. Fulfillment of the EV charging request can involve at least two factors: availability and capacity. The availability factor involves identifying one or more EV charging stations 102 as available for charging the requesting EV during the charging timeframe as a function of the station capacity information. For example, such an identification can involve determining whether any particular EV charging station 102 is not currently in use (e.g., for present charging requests) or predicted not to be in use (e.g., for future charging requests). Whether the EV charging station 102 is determined to be in use can involve determining whether any vehicle is currently using the location of the EV charging station 102 for parking in a manner that interferes with another EV's use for EV charging, whether another EV is using the EV charging station 102 for EV charging, whether the EV charging station 102 is already reserved or otherwise scheduled to be used by another EV for EV charging, etc. The capacity factor involves identifying one or more EV charging stations 102 as having at least a threshold associated power delivery capacity for charging the requesting EV during the charging timeframe as a function of the grid capacity information. For example, such an identification can involve determining which grid structure(s) 104 are coupled to supply power via a particular EV charging station 102 and determining the capacity (e.g., present load, predicted load, etc.) for those grid structure(s) 104.

In some embodiments, identifying the EV charging stations 102 can include identifying a vehicle charging profile of the requesting EV (e.g., according to the EV charging request). In such embodiments, each of the EV charging stations 102 has a respective station charging profile. Identifying the EV charging stations 102 includes identifying a set of candidate stations as those EV charging stations 102 that are both available and have capacity during the charging timeframe; then identifying one or more of the set of candidate stations and as having a respective EV charging profile that is pairable with the vehicle charging profile of the requesting EV. As one example, the vehicle charging profile of the requesting EV indicates that the requesting EV is configured for wireless charging in a defined fast charge mode, and the identified EV charging station 102 is found to have a pairable EV charging profile when it is also configured for wireless charging in the defined fast charge mode. As another example, the vehicle charging profile of the requesting EV indicates a hierarchical list of supported charging profiles: wired charging with plug type A in charge mode A, then wireless charging in charge mode B, then wired charging with plug type A in charge mode B. In such an example, one or more EV charging station 102 can be identified as having a pairable EV charging profile when it is configured for any one of those supported charging profiles, but the scheduling processor 240 can be configured to give preference to EV charging stations 102 that support the more preferred charging profiles.

Returning to FIG. 2, embodiments of the scheduling processor 240 can optimize the selection and/or presentation of EV charging stations 102 for fulfillment of EV charging requests in many ways. Some implementations can include queuing with or without prioritization. For example, when many requests are received substantially contemporaneously, various implementations can fulfill requests according to a predetermined ordering algorithm (e.g., first-in first-out, last-in first-out, round robin, etc.), according to a predetermined prioritization algorithm (e.g., preference is given to loyalty customers, customers with particular status, customers paying more for the services, etc.), predetermined fulfillment maximization algorithm (e.g., preference given to solutions that fulfill the highest number of requests, even if that leads to more sub-optimal pairings; such as by scheduling requests first for those requesting EVs having the largest number of constraints), predetermined fulfillment optimization algorithm (e.g., preference given to solutions that provide the most optimal pairings wherever possible, even if that leads to more requests not able to be fulfilled), etc. Further, fulfillment can involve any suitable number of variables. An example of a less complex solution can account primarily for present availability and power delivery capacity. An example of a more complex solution can generate a multidimensional vector space that accounts for grid profiles, station profiles, charging profile pairing, traffic and weather profiles, and/or other preferences and variables. Candidate EV charging stations 102 can be plotted in the multidimensional vector space to compute scores indicating a likelihood of preference by an EV customer for each candidate EV charging station 102. A defined number of candidates having the highest scores can be displayed for the EV customer (e.g., via a scheduling application interface), and the EV customer can select one or more EV charging stations 102 to use now, to reserve for later, to save as a preferred location, etc.

As described above, embodiments receive grid capacity information and station capacity information, which can be used to generate EV charging request fulfillment solutions. In some embodiments, the grid capacity information and/or station capacity information is sent automatically and periodically from the power grid server(s) 110 and/or the EV charging stations 102 to the EV charging server 108. For example, the information is received automatically according to a schedule, a certain number of times per day, etc. In other embodiments, the grid capacity information and/or station capacity information is received automatically from the power grid server(s) 110 and/or the EV charging stations 102 to the EV charging server 108 in response to a trigger event. For example, an EV charging station 102 can send an update to the EV charging server 108 whenever an EV 205 couples to, or decouples from, its charging interface. As another example, a power grid server 108 can send an update whenever there is greater than some predetermined amount of change in measured load on one or more power grid structures 104. In other embodiments, the grid capacity information and/or station capacity information is received subsequent to, and in response to, an EV charging request. For example, the EV charging server 108, in response to receiving an EV charging request, can issue a request message to some or all of the power grid server(s) 110 and/or the EV charging stations 102, and update information (i.e., the grid capacity information and/or station capacity information) is sent to the EV charging server 108, accordingly.

Having identified one or more EV charging stations 102 for fulfilling the EV charging request, embodiments of the communications processor 250 can communicate an EV charging response (e.g., via the communication network(s) 106) to direct the requesting EV to the identified EV charging station(s) 102. For example, the scheduling processor 240 can generate the EV charging response to include an identifier of one or more select EV charging stations 102 and/or to include additional information, such as the locations (e.g., addresses) of the EV charging stations 102, charging profiles of the EV charging stations 102, etc. In some embodiments, generating the EV charging response involves querying the guidance processor 260 for guidance information to the identified EV charging station(s) 102. For example, guidance information can be generated by the guidance processor 260, so that the EV charging response includes driving directions or other instructions usable by a human driver and/or a navigation system to guide the requesting EV to the identified EV charging station(s) 102. In other implementations, the guidance information can be generated by the guidance processor 260 in such a way as to autonomously guide, or assist in the autonomous guidance of, the requesting vehicle to the identified EV charging station(s) 102.

As illustrated, some embodiments of the EV charging server 108 can include additional components, such as a station controller 255. Embodiments of the station controller 255 can control operations of individual EV charging stations 102, such as by remotely activating and deactivating the EV charging stations 102 (e.g., remotely breaking the electrical coupling between the power grid and the charging interface). This can be desirable for added safety, prevention of tampering and misuse, and/or other reasons. Further, some embodiments of the EV charging server 108 can receive feedback information and/or otherwise monitor the effects of EV charging request fulfillment. For example, feedback from the EV charging stations 102 can be used to detect when a requesting EV actually arrived at an EV charging station 102 location and/or actually began EV charging (e.g., as compared to a scheduled time), to detect how much charge was actually delivered to an EV via the charging interface of a EV charging station 102, to detect how long an EV charging interaction actually took, to detect which of multiple provided options for EV charging stations 102 and/or charging profiles was selected by an EV customer, and/or to detect any other suitable information. In some implementations, such information is communicated back to stakeholders, such as owners or operators of EV charging stations 102, advertisers, designers of request fulfillment algorithms, etc. In other implementations, such information is fed back to automated optimization systems. For example, such information can be used to refine, expand, and/or otherwise augment grid profiles and/or station profiles; and/or such information can be used by machine learning algorithms in the scheduling processor 240 to improve scheduling and fulfillment algorithms.

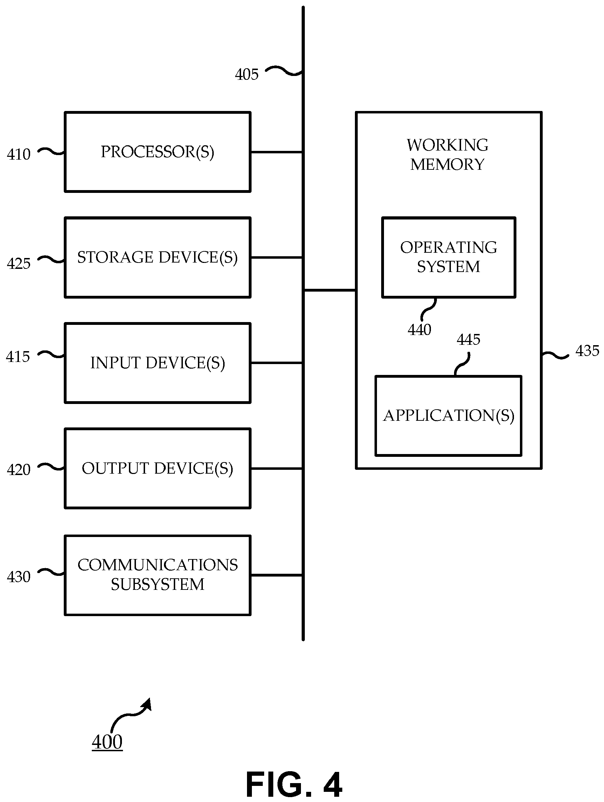

**FIG. 4** illustrates a simplified computer system 400 that can be used implement various embodiments described and illustrated herein. The computer system 400 can be used to implement some or all of the various computational environments described herein, such as the EV charging server 108, or certain components thereof. Further, embodiments of the computer system 400 can perform some or all of the steps of the methods provided by various embodiments. It should be noted that FIG. 4 is meant only to provide a generalized illustration of various components, any or all of which may be utilized as appropriate. FIG. 4, therefore, broadly illustrates how individual system elements may be implemented in a relatively separated or relatively more integrated manner.

The computer system 400 is shown comprising hardware elements that can be electrically coupled via a bus 405, or may otherwise be in communication, as appropriate. The hardware elements may include one or more processors 410, including without limitation one or more general-purpose processors and/or one or more special-purpose processors such as digital signal processing chips, graphics acceleration processors, and/or the like; one or more input devices 415, which can include without limitation a mouse, a keyboard, a camera, and/or the like; and one or more output devices 420, which can include without limitation a display device, a printer, and/or the like.

The computer system 400 may further include and/or be in communication with one or more non-transitory storage devices 425, which can comprise, without limitation, local and/or network accessible storage, and/or can include, without limitation, a disk drive, a drive array, an optical storage device, a solid-state storage device, such as a random access memory ("RAM"), and/or a read-only memory ("ROM"), which can be programmable, flash-updateable, and/or the like. Such storage devices may be configured to implement any appropriate data stores, including without limitation, various file systems, database structures, and/or the like.

The computer system 400 might also include a communications subsystem 430, which can include without limitation a modem, a network card (wireless or wired), an infrared communication device, a wireless communication device, and/or a chipset such as a Bluetooth™ device, an 402.11 device, a WiFi device, a WiMax device, cellular communication facilities, etc., and/or the like. The communications subsystem 430 may include one or more input and/or output communication interfaces to permit data to be exchanged with a network such as the communication network(s) 106 described herein, other computer systems, television, and/or any other devices described herein. Depending on the desired functionality and/or other implementation concerns, a portable electronic device or similar device may communicate image and/or other information via the communications subsystem 430. In other embodiments, a portable electronic device, e.g. the first electronic device, may be incorporated into the computer system 400, e.g., an electronic device as an input device 415. In some embodiments, the computer system 400 will further comprise a working memory 435, which can include a RAM or ROM device, as described above.

The computer system 400 also can include software elements, shown as being currently located within the working memory 435, including an operating system 440, device drivers, executable libraries, and/or other code, such as one or more application programs 445, which may comprise computer programs provided by various embodiments, and/or may be designed to implement methods, and/or configure systems, provided by other embodiments, as described herein. Merely by way of example, one or more procedures described with respect to the methods discussed above, such as those described in relation to FIG. 4, might be implemented as code and/or instructions executable by a computer and/or a processor within a computer; in an aspect, then, such code and/or instructions can be used to configure and/or adapt a general purpose computer or other device to perform one or more operations in accordance with the described methods.

A set of these instructions and/or code may be stored on a non-transitory computer-readable storage medium, such as the storage device(s) 425 described above. In some cases, the storage medium might be incorporated within a computer system, such as computer system 400. In other embodiments, the storage medium might be separate from a computer system e.g., a removable medium, such as a compact disc, and/or provided in an installation package, such that the storage medium can be used to program, configure, and/or adapt a general purpose computer with the instructions/code stored thereon. These instructions might take the form of executable code, which is executable by the computer system 400 and/or might take the form of source and/or installable code, which, upon compilation and/or installation on the computer system 400 e.g., using any of a variety of generally available compilers, installation programs, compression/decompression utilities, etc., then takes the form of executable code.

It will be apparent to those skilled in the art that substantial variations may be made in accordance with specific requirements. For example, customized hardware might also be used, and/or particular elements might be implemented in hardware, software including portable software, such as applets, etc., or both. Further, connection to other computing devices such as network input/output devices may be employed.

As mentioned above, in one aspect, some embodiments may employ a computer system such as the computer system 400 to perform methods in accordance with various embodiments of the technology. According to a set of embodiments, some or all of the procedures of such methods are performed by the computer system 400 in response to processor 410 executing one or more sequences of one or more instructions, which might be incorporated into the operating system 440 and/or other code, such as an application program 445, contained in the working memory 435. Such instructions may be read into the working memory 435 from another computer-readable medium, such as one or more of the storage device(s) 425. Merely by way of example, execution of the sequences of instructions contained in the working memory 435 might cause the processor(s) 410 to perform one or more procedures of the methods described herein. Additionally or alternatively, portions of the methods described herein may be executed through specialized hardware.

According to some embodiments, the computer system 400 implements the EV charging server 108. The communications subsystem 430 can include a communications processor to communicate with the communication network(s) 106. The communications processor can include non-transient memory, having stored thereon, executable instructions to receive a grid capacity information from a power grid server 110 of a power grid, and executable instructions to receive station capacity information from EV charging stations 102 indicating an availability of the EV charging stations for EV charging. The communications processor can also include executable instructions to receive an EV charging request associated with a requesting EV (e.g., from a requesting EV, a mobile device of an EV customer, etc.). The communications processor can be implemented as part of the processor(s) 410, and the non-transient memory of the communications processor can be implemented as part of the working memory 435.

Such embodiments of the computer system 400 can also include a scheduling processor to communicate with the communication network(s) 106. The scheduling processor can include non-transient memory, having stored thereon: executable instructions to compute a charging timeframe according to the EV charging request; and executable instructions to identify at least one of the EV charging stations 102 as available for charging of the requesting EV during the charging timeframe as a function of the station capacity information, and as having at least a threshold associated power delivery capacity for charging of the requesting EV during the charging timeframe as a function of the grid capacity information. The scheduling processor can be implemented as part of the processor(s) 410, and the non-transient memory of the scheduling processor can be implemented as part of the working memory 435. In such embodiments, the non-transient memory of the communications processor can further have, stored thereon, executable instructions to communicate an EV charging response via the communication network to direct the requesting EV to the identified at least one EV charging station.

The terms "machine-readable medium" and "computer-readable medium," as used herein, refer to any medium that participates in providing data that causes a machine to operate in a specific fashion. In an embodiment implemented using the computer system 400, various computer-readable media might be involved in providing instructions/code to processor(s) 410 for execution and/or might be used to store and/or carry such instructions/code. In many implementations, a computer-readable medium is a physical and/or tangible storage medium. Such a medium may take the form of a non-volatile media or volatile media. Non-volatile media include, for example, optical and/or magnetic disks, such as the storage device(s) 426. Volatile media include, without limitation, dynamic memory, such as the working memory 436.

Common forms of physical and/or tangible computer-readable media include, for example, a floppy disk, a flexible disk, hard disk, magnetic tape, or any other magnetic medium, a CD-ROM, any other optical medium, punchcards, papertape, any other physical medium with patterns of holes, a RAM, a PROM, EPROM, a FLASH-EPROM, any other memory chip or cartridge, or any other medium from which a computer can read instructions and/or code.

Various forms of computer-readable media may be involved in carrying one or more sequences of one or more instructions to the processor(s) 410 for execution. Merely by way of example, the instructions may initially be carried on a magnetic disk and/or optical disc of a remote computer. A remote computer might load the instructions into its dynamic memory and send the instructions as signals over a transmission medium to be received and/or executed by the computer system 400.

The communications subsystem 430 and/or components thereof generally will receive signals, and the bus 405 then might carry the signals and/or the data, instructions, etc. carried by the signals to the working memory 435, from which the processor(s) 410 retrieves and executes the instructions. The instructions received by the working memory 435 may optionally be stored on a non-transitory storage device 425 either before or after execution by the processor(s) 410.

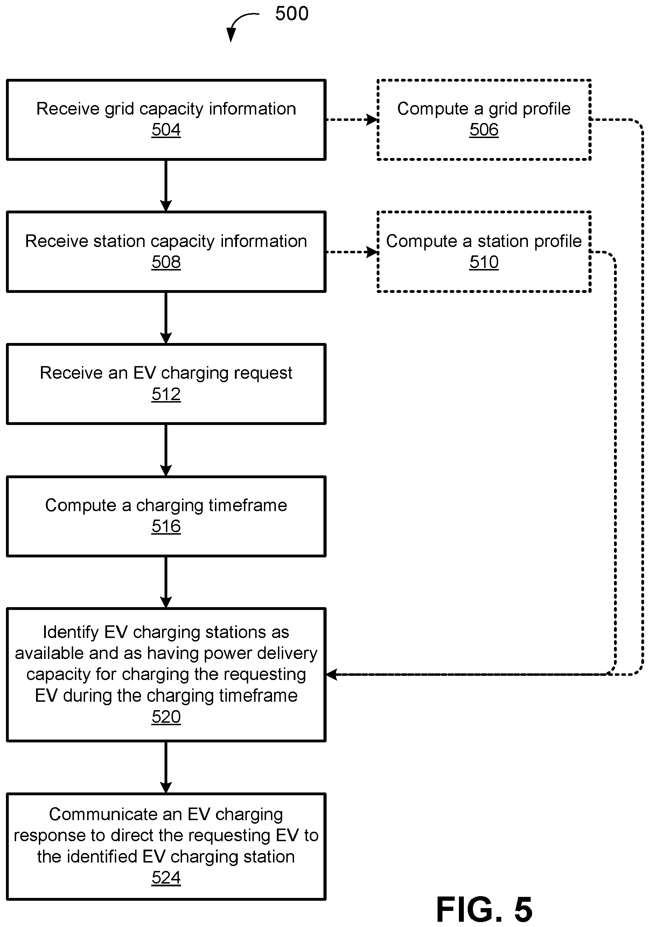

**FIG. 5** shows an illustrative flow diagram of a method 500 for EV charging, according to various embodiments. Embodiments of the method 500 begin at stage 504 by receiving grid capacity information via a communication network from a power grid server in communication with multiple power grid structures of a power grid, the grid capacity information indicating a load on at least a portion of the power grid. In some embodiments, at stage 506, the method 500 can further compute a grid profile as a function of the grid capacity information, the grid profile estimating a future load on at least a portion of the power grid as a function of historically received grid capacity information. At stage 508, embodiments can receive station capacity information via the communication network from EV charging stations indicating an availability of the EV charging stations for EV charging, each EV charging station electrically coupled with the power grid to deliver electric power from the power grid to an EV electrically coupled with the EV charging station via a charging interface. In some embodiments, at stage 510, the method 500 can further compute a station profile as a function of the station capacity information, the station profile estimating a future station availability as a function of historically received station capacity information.

At stage 512, embodiments can receive an EV charging request associated with a requesting EV. At stage 516, embodiments can compute a charging timeframe according to the EV charging request. At stage 520, embodiments can identify at least one of the EV charging stations as available for charging of the requesting EV during the charging timeframe as a function of the station capacity information, and as having at least a threshold associated power delivery capacity for charging of the requesting EV during the charging timeframe as a function of the grid capacity information. In embodiments where a grid profile is computed at stage 506, the EV charging stations can be identified as having at least the threshold associated grid capacity for charging of the requesting EV during the charging timeframe as a function of the grid profile. In embodiments where a station profile is computed at stage 510, the EV charging stations can be identified as available for charging of the requesting EV during the charging timeframe as a function of the station profile. At stage 524, embodiments can communicate an EV charging response via the communication network to direct the requesting EV to the identified at least one EV charging station.

The methods, systems, and devices discussed above are examples. Various configurations may omit, substitute, or add various procedures or components as appropriate. For instance, in alternative configurations, the methods may be performed in an order different from that described, and/or various stages may be added, omitted, and/or combined. Also, features described with respect to certain configurations may be combined in various other configurations. Different aspects and elements of the configurations may be combined in a similar manner. Also, technology evolves and, thus, many of the elements are examples and do not limit the scope of the disclosure or claims.

Specific details are given in the description to provide a thorough understanding of exemplary configurations including implementations. However, configurations may be practiced without these specific details. For example, well-known circuits, processes, algorithms, structures, and techniques have been shown without unnecessary detail in order to avoid obscuring the configurations. This description provides example configurations only, and does not limit the scope, applicability, or configurations of the claims. Rather, the preceding description of the configurations will provide those skilled in the art with an enabling description for implementing described techniques. Various changes may be made in the function and arrangement of elements without departing from the spirit or scope of the disclosure.

Also, configurations may be described as a process which is depicted as a schematic flowchart or block diagram. Although each may describe the operations as a sequential process, many of the operations can be performed in parallel or concurrently. In addition, the order of the operations may be rearranged. A process may have additional steps not included in the figure. Furthermore, examples of the methods may be implemented by hardware, software, firmware, middleware, microcode, hardware description languages, or any combination thereof. When implemented in software, firmware, middleware, or microcode, the program code or code segments to perform the necessary tasks may be stored in a non-transitory computer-readable medium such as a storage medium. Processors may perform the described tasks.

Having described several example configurations, various modifications, alternative constructions, and equivalents may be used without departing from the spirit of the disclosure. For example, the above elements may be components of a larger system, wherein other rules may take precedence over or otherwise modify the application of the technology. Also, a number of steps may be undertaken before, during, or after the above elements are considered. Accordingly, the above description does not bind the scope of the claims.

As used herein and in the appended claims, the singular forms "a", "an", and "the" include plural references unless the context clearly dictates otherwise. Thus, for example, reference to "a user" includes a plurality of such users, and reference to "the processor" includes reference to one or more processors and equivalents thereof known to those skilled in the art, and so forth.

Also, the words "comprise", "comprising", "contains", "containing", "include", "including", and "includes", when used in this specification and in the following claims, are intended to specify the presence of stated features, integers, components, or steps, but they do not preclude the presence or addition of one or more other features, integers, components, steps, acts, or groups.
Embodiments of the invention may be provided according to the below clauses, with preferred features being set out in the dependent clauses:
1. A system for electric vehicle (EV) charging, the system comprising:
   a geographically distributed plurality of EV charging stations electrically coupled with a power grid, each EV charging station comprising a charging interface adapted to deliver electric power from the power grid to an EV electrically coupled with the charging interface; and
   an EV charging server configured to be in communication with the plurality of EV charging stations via a communication network to receive station capacity information from the EV charging stations indicating availabilities of the EV charging stations, in communication with the power grid via the communication network to receive grid capacity information from the power grid indicating electrical load on the power grid, and, in response to receiving an EV charging request associated with a requesting EV, to:
      compute a charging timeframe according to the EV charging request;
      identify at least one of the plurality of EV charging stations as available for charging of the requesting EV during the charging timeframe as a function of the station capacity information, and as having at least a threshold associated power delivery capacity for charging of the requesting EV during the charging timeframe as a function of the grid capacity information; and
      communicate an EV charging response via the communication network to direct the requesting EV to the identified at least one EV charging station.
2. The system of clause 1, wherein:
   the power grid comprises a plurality of power grid structures, each power grid structure associated with a respective portion of a total grid capacity of the power grid; and
   each EV charging station is electrically coupled with at least one of the power grid structures,
   such that each charging interface is adapted to deliver electric power from the coupled at least one of the power grid structures, and
   such that the associated power delivery capacity of each EV charging station is defined by the respective portion of the total grid capacity associated with the coupled at least one of the power grid structures.
3. The system of clause 1 or 2, wherein:
   the EV charging server is further in communication with a plurality of EVs via the communication network, the requesting EV being one of the plurality of EVs; and
   the EV charging server is further configured to receive the EV charging request via the communication network from the requesting EV.
4. The system of clause 3, wherein:
   the EV charging server is in communication with the requesting EV by being in communication with a mobile device of a human EV customer associated with the requesting EV.
5. The system of any preceding clause, wherein:
   the EV charging server is further configured to compute a grid profile as a function of the grid capacity information, the grid profile estimating a future load on at least a portion of the power grid as a function of historically received grid capacity information; and
   the at least one of the plurality of EV charging stations is identified as having at least the threshold associated grid capacity for charging of the requesting EV during the charging timeframe as a function of the grid profile.
6. The system of any preceding clause, wherein:
   the EV charging server is further configured to compute a station profile as a function of the station capacity information, the station profile estimating a future station availability as a function of historically received station capacity information; and
   the at least one of the plurality of EV charging stations is identified as available for charging of the requesting EV during the charging timeframe as a function of the station profile.
7. The system of any preceding clause, wherein:
   the EV charging server is further configured, in response to receiving the EV charging request to communicate a request message to the at least some of the EV charging stations via the communication network; and
   the station capacity information is received via the communication network from the at least some of the EV charging stations in response to the request message.
8. The system of any preceding clause, wherein:
   the EV charging server is further configured, in response to receiving the EV charging request to communicate a request message to the power grid via the communication network; and
   the grid capacity information is received via the communication network from the power grid in response to the request message.
9. The system of any preceding clause, wherein:
   at least one of the grid capacity information or the station capacity information is received by the EV charging server via the communication network periodically according to a predefined schedule.
10. A method for electric vehicle (EV) charging, the method comprising:
   receiving grid capacity information via a communication network from a power grid, the grid capacity information indicating a load on at least a portion of the power grid;
   receiving station capacity information via the communication network from at least some of a plurality of EV charging stations indicating an availability of the at least some EV charging stations for EV charging, each EV charging station electrically coupled with the power grid to deliver electric power from the power grid to an EV electrically coupled with the EV charging station via a charging interface;
   receiving an EV charging request associated with a requesting EV;
   computing a charging timeframe according to the EV charging request;
   identifying at least one of the plurality of EV charging stations as available for charging of the requesting EV during the charging timeframe as a function of the station capacity information, and as having at least a threshold associated power delivery capacity for charging of the requesting EV during the charging timeframe as a function of the grid capacity information; and
   communicating an EV charging response via the communication network to direct the requesting EV to the identified at least one EV charging station.
11. The method of clause 10, further comprising:
   identifying a vehicle charging profile of the requesting EV according to the EV charging request,
   wherein each of the plurality of EV charging stations has a respective station charging profile, and
   wherein identifying the at least one of the plurality of EV charging stations comprises:
      identifying a set of candidate stations as those of the plurality of EV charging stations available for charging of the requesting EV during the charging timeframe and having at least the threshold associated power delivery capacity for charging of the requesting EV during the charging timeframe; and
      identifying the at least one of the plurality of EV charging stations as being one the set of candidate stations and as having a respective EV charging profile that is pairable with the vehicle charging profile of the requesting EV.
12. The method of clause 11, wherein the vehicle charging profile of the requesting EV indicates an EV charging interface type supported by the requesting EV.
13. The method of any of clauses 10 to 12, wherein computing the charging timeframe according to the EV charging request comprises:
   determining a geographic location of the requesting EV in accordance with a receipt time of the EV charging request;
   identifying a set of candidate stations as those of the plurality of EV charging stations having respective station locations within a threshold proximity to the geographic location of the requesting EV;
   computing a respective travel time to the respective station location of each candidate station from the present location; and
   computing the charging timeframe to account for the respective travel times.
14. The method of clause 13, wherein:
   determining the geographic location comprises computing a predicted travel path for the requesting EV;
   identifying the set of candidate stations comprises identifying those of the plurality of EV charging stations as having respective station locations within the threshold proximity to the predicted travel path.
15. The method of clause 13 or 14, wherein computing the charging timeframe further comprises:
   determining an estimated remaining range according to a present charge state of a battery of the requesting EV; and
   computing the threshold proximity as a function of the estimated remaining range.
16. The method of any of clauses 10 to 15, wherein the EV charging request is received from the requesting EV via the communication network.
17. The method of any of clauses 10 to 16, further comprising:
   computing a grid profile as a function of the grid capacity information, the grid profile estimating a future load on at least a portion of the power grid as a function of historically received grid capacity information,
   wherein the at least one of the plurality of EV charging stations is identified as having at least the threshold associated grid capacity for charging of the requesting EV during the charging timeframe as a function of the grid profile.
18. The method of any of clauses 10 to 17, further comprising:
   computing a station profile as a function of the station capacity information, the station profile estimating a future station availability as a function of historically received station capacity information,
   wherein the at least one of the plurality of EV charging stations is identified as available for charging of the requesting EV during the charging timeframe as a function of the station profile.
19. The method of any of clauses 10 to 18, wherein:
   at least one of receiving the grid capacity information or receiving the station capacity information is performed subsequent to, and in response to receiving the EV charging request.
20. A system for electric vehicle (EV) charging, the system comprising:
   a communications processor to communicate with a communication network and comprising non-transient memory, having stored thereon:
      executable instructions to receive a grid capacity information via the communication network from a power grid, the grid capacity information indicating a load on at least a portion of the power grid;
      executable instructions to receive station capacity information via the communication network from at least some of a plurality of EV charging stations indicating an availability of the at least some EV charging stations for EV charging, each EV charging station electrically coupled with the power grid to deliver electric power from the power grid to an EV electrically coupled with the EV charging station via a charging interface; and
      executable instructions to receive an EV charging request associated with a requesting EV; and
   a scheduling processor to communicate with the communication network and comprising non-transient memory, having stored thereon:
      executable instructions to compute a charging timeframe according to the EV charging request; and
      executable instructions to identify at least one of the plurality of EV charging stations as available for charging of the requesting EV during the charging timeframe as a function of the station capacity information, and as having at least a threshold associated power delivery capacity for charging of the requesting EV during the charging timeframe as a function of the grid capacity information,
   wherein the non-transient memory of the communications processor further has, stored thereon, executable instructions to communicate an EV charging response via the communication network to direct the requesting EV to the identified at least one EV charging station.
21. A server configured for use in the system of any of clauses 1 to 9.

## Claims

1. A system for electric vehicle (EV) charging, the system comprising:
a geographically distributed plurality of EV charging stations electrically coupled with a power grid, each EV charging station comprising a charging interface adapted to deliver electric power from the power grid to an EV electrically coupled with the charging interface; and
an EV charging server configured to be in communication with the plurality of EV charging stations via a communication network to receive station capacity information from the EV charging stations indicating availabilities of the EV charging stations, in communication with the power grid via the communication network to receive grid capacity information from the power grid indicating electrical load on the power grid, and, in response to receiving an EV charging request associated with a requesting EV, to:
compute a charging timeframe according to the EV charging request;
identify at least one of the plurality of EV charging stations as available for charging of the requesting EV during the charging timeframe as a function of the station capacity information, and as having at least a threshold associated power delivery capacity for charging of the requesting EV during the charging timeframe as a function of the grid capacity information; and
communicate an EV charging response via the communication network to direct the requesting EV to the identified at least one EV charging station.

2. The system of claim 1, wherein:
the power grid comprises a plurality of power grid structures, each power grid structure associated with a respective portion of a total grid capacity of the power grid; and
each EV charging station is electrically coupled with at least one of the power grid structures,
such that each charging interface is adapted to deliver electric power from the coupled at least one of the power grid structures, and
such that the associated power delivery capacity of each EV charging station is defined by the respective portion of the total grid capacity associated with the coupled at least one of the power grid structures.

3. The system of claim 1 or 2, wherein:
the EV charging server is further in communication with a plurality of EVs via the communication network, the requesting EV being one of the plurality of EVs; and
the EV charging server is further configured to receive the EV charging request via the communication network from the requesting EV;
wherein, optionally:
the EV charging server is in communication with the requesting EV by being in communication with a mobile device of a human EV customer associated with the requesting EV.

4. The system of any preceding claim, wherein:
the EV charging server is further configured to compute a grid profile as a function of the grid capacity information, the grid profile estimating a future load on at least a portion of the power grid as a function of historically received grid capacity information; and
the at least one of the plurality of EV charging stations is identified as having at least the threshold associated grid capacity for charging of the requesting EV during the charging timeframe as a function of the grid profile.

5. The system of claim 1, wherein:
the EV charging server is further configured to compute a station profile as a function of the station capacity information, the station profile estimating a future station availability as a function of historically received station capacity information; and
the at least one of the plurality of EV charging stations is identified as available for charging of the requesting EV during the charging timeframe as a function of the station profile.

6. The system of any preceding claim, wherein:
the EV charging server is further configured, in response to receiving the EV charging request to communicate a request message to the at least some of the EV charging stations via the communication network; and
the station capacity information is received via the communication network from the at least some of the EV charging stations in response to the request message;
and/or
wherein:
the EV charging server is further configured, in response to receiving the EV charging request to communicate a request message to the power grid via the communication network; and
the grid capacity information is received via the communication network from the power grid in response to the request message.

7. A method for electric vehicle (EV) charging, the method comprising:
receiving grid capacity information via a communication network from a power grid, the grid capacity information indicating a load on at least a portion of the power grid;
receiving station capacity information via the communication network from at least some of a plurality of EV charging stations indicating an availability of the at least some EV charging stations for EV charging, each EV charging station electrically coupled with the power grid to deliver electric power from the power grid to an EV electrically coupled with the EV charging station via a charging interface;
receiving an EV charging request associated with a requesting EV;
computing a charging timeframe according to the EV charging request;
identifying at least one of the plurality of EV charging stations as available for charging of the requesting EV during the charging timeframe as a function of the station capacity information, and as having at least a threshold associated power delivery capacity for charging of the requesting EV during the charging timeframe as a function of the grid capacity information; and
communicating an EV charging response via the communication network to direct the requesting EV to the identified at least one EV charging station.

8. The method of claim 7, further comprising:
identifying a vehicle charging profile of the requesting EV according to the EV charging request,
wherein each of the plurality of EV charging stations has a respective station charging profile, and
wherein identifying the at least one of the plurality of EV charging stations comprises:
identifying a set of candidate stations as those of the plurality of EV charging stations available for charging of the requesting EV during the charging timeframe and having at least the threshold associated power delivery capacity for charging of the requesting EV during the charging timeframe; and
identifying the at least one of the plurality of EV charging stations as being one the set of candidate stations and as having a respective EV charging profile that is pairable with the vehicle charging profile of the requesting EV;
wherein, optionally, the vehicle charging profile of the requesting EV indicates an EV charging interface type supported by the requesting EV.

9. The method of claim 7 or 8, wherein computing the charging timeframe according to the EV charging request comprises:
determining a geographic location of the requesting EV in accordance with a receipt time of the EV charging request;
identifying a set of candidate stations as those of the plurality of EV charging stations having respective station locations within a threshold proximity to the geographic location of the requesting EV;
computing a respective travel time to the respective station location of each candidate station from the present location; and
computing the charging timeframe to account for the respective travel times.

10. The method of claim 9, wherein:
determining the geographic location comprises computing a predicted travel path for the requesting EV;
identifying the set of candidate stations comprises identifying those of the plurality of EV charging stations as having respective station locations within the threshold proximity to the predicted travel path.

11. The method of claim 9 or 10, wherein computing the charging timeframe further comprises:
determining an estimated remaining range according to a present charge state of a battery of the requesting EV; and
computing the threshold proximity as a function of the estimated remaining range.

12. The method of any of claims 7 to 11, further comprising:
computing a grid profile as a function of the grid capacity information, the grid profile estimating a future load on at least a portion of the power grid as a function of historically received grid capacity information,
wherein the at least one of the plurality of EV charging stations is identified as having at least the threshold associated grid capacity for charging of the requesting EV during the charging timeframe as a function of the grid profile.

13. The method of any of claims 7 to 12, further comprising:
computing a station profile as a function of the station capacity information, the station profile estimating a future station availability as a function of historically received station capacity information,
wherein the at least one of the plurality of EV charging stations is identified as available for charging of the requesting EV during the charging timeframe as a function of the station profile.

14. The method of any of claims 7 to 13, wherein:
at least one of receiving the grid capacity information or receiving the station capacity information is performed subsequent to, and in response to receiving the EV charging request.

15. A system for electric vehicle (EV) charging, the system comprising:
a communications processor to communicate with a communication network and comprising non-transient memory, having stored thereon:
executable instructions to receive a grid capacity information via the communication network from a power grid, the grid capacity information indicating a load on at least a portion of the power grid;
executable instructions to receive station capacity information via the communication network from at least some of a plurality of EV charging stations indicating an availability of the at least some EV charging stations for EV charging, each EV charging station electrically coupled with the power grid to deliver electric power from the power grid to an EV electrically coupled with the EV charging station via a charging interface; and
executable instructions to receive an EV charging request associated with a requesting EV; and
a scheduling processor to communicate with the communication network and comprising non-transient memory, having stored thereon:
executable instructions to compute a charging timeframe according to the EV charging request; and
executable instructions to identify at least one of the plurality of EV charging stations as available for charging of the requesting EV during the charging timeframe as a function of the station capacity information, and as having at least a threshold associated power delivery capacity for charging of the requesting EV during the charging timeframe as a function of the grid capacity information,
wherein the non-transient memory of the communications processor further has, stored thereon, executable instructions to communicate an EV charging response via the communication network to direct the requesting EV to the identified at least one EV charging station.
